Europäisches Patentamt

European Patent Office

Office européen des brevets

(11) Veröffentlichungsnummer : **0 208 137**
**B1**

(12) # EUROPÄISCHE PATENTSCHRIFT

(45) Veröffentlichungstag der Patentschrift :
**17.05.89**

(21) Anmeldenummer : **86107588.5**

(22) Anmeldetag : **04.06.86**

(51) Int. Cl.⁴ : **H 02 K 23/66**, H 02 K 23/18

(54) **Handwerkzeugmaschine für Rechts- und Linkslauf.**

(30) Priorität : **10.07.85 DE 3524614**

(43) Veröffentlichungstag der Anmeldung :
**14.01.87 Patentblatt 87/03**

(45) Bekanntmachung des Hinweises auf die Patenterteilung : **17.05.89 Patentblatt 89/20**

(84) Benannte Vertragsstaaten :
**DE FR GB**

(56) Entgegenhaltungen :
**DE—B— 2 147 790
US—A— 2 500 571**

(73) Patentinhaber : **ROBERT BOSCH GMBH
Postfach 50
D-7000 Stuttgart 1 (DE)**

(72) Erfinder : **Klingenstein, Klaus
Schönbuchstrasse 32
D-7022 Leinfelden-Echterdingen 1 (DE)**
Erfinder : **Rieker, Werner, Dipl.-Ing. (FH)
Beethovenstrasse 23
D-7035 Waldenbuch (DE)**
Erfinder : **Schaal, Günter, Dipl.-Ing. (FH)
Am Ochsenwald 25
D-7000 Stuttgart 80 (DE)**

EP 0 208 137 B1

Jouve, 18, rue St-Denis, 75001 Paris, France

## Beschreibung

### Stand der Technik

Die Erfindung geht aus von einer Handwerkzeugmaschine nach der Gattung des Hauptanspruchs. Bei einer solchen Handwerkzeugmaschine gemäß der US-PS 25 00 571, wird mit dem Umschalten der Drehrichtung des Ankers gleichzeitig eine Bürstenverschiebung vorgenommen, um die gleiche Leistung wie bei drehrichtungsbezogen geschalteten Universalmotoren zu erreichen. Dabei sind aufwendige Einrichtungen zur Bürstenverschiebung eingesetzt, bei denen zudem handverlegte und -angeschlossene Verbindungsleitungen benötigt werden. Mit solchen Einrichtungen ausgerüstete Universalmotoren sind sehr teuer und nicht geeignet für einen wirtschaftlichen Großserienbau.

### Vorteile der Erfindung

Die erfindungsgemäße Handwerkzeugmaschine mit den kennzeichnenden Merkmalen des Hauptanspruchs hat demgegenüber den Vorteil, daß sie in Großserie mit geringstem Fertigungsaufwand wirtschaftlich herstellbar sind. Durch die Verwendung nur zweier Trägerteile für den Umschalter, die aus Isoliermaterial bestehen, miteinander verbindbar und danach in Grenzen gegeneinander verdrehbar sind, ergibt sich die Möglichkeit der wechselnden Kontaktgabe an der Verbindungsstelle und zugleich der Steckmontage des Umkehrschalters und des Umkehrschalters mit dem Universalmotor.

Durch die in den Unteransprüchen aufgeführten Maßnahmen sind vorteilhafte Weiterbildungen und Verbesserungen der im Hauptanspruch angegebenen Handwerkzeugmaschine möglich. Besonders vorteilhaft für einen sicheren Dauerbetrieb einer solchen Handwerkzeugmaschine ist die staubdichte Kammer für die Wechselkontakte, die die zwei Trägerkörper des Umkehrschalters an ihrer Verbindungsstelle bilden.

### Zeichnung

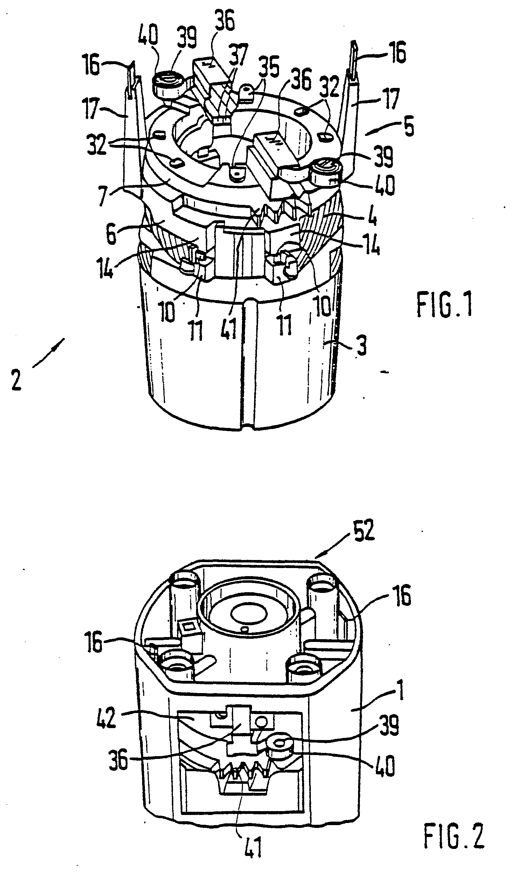

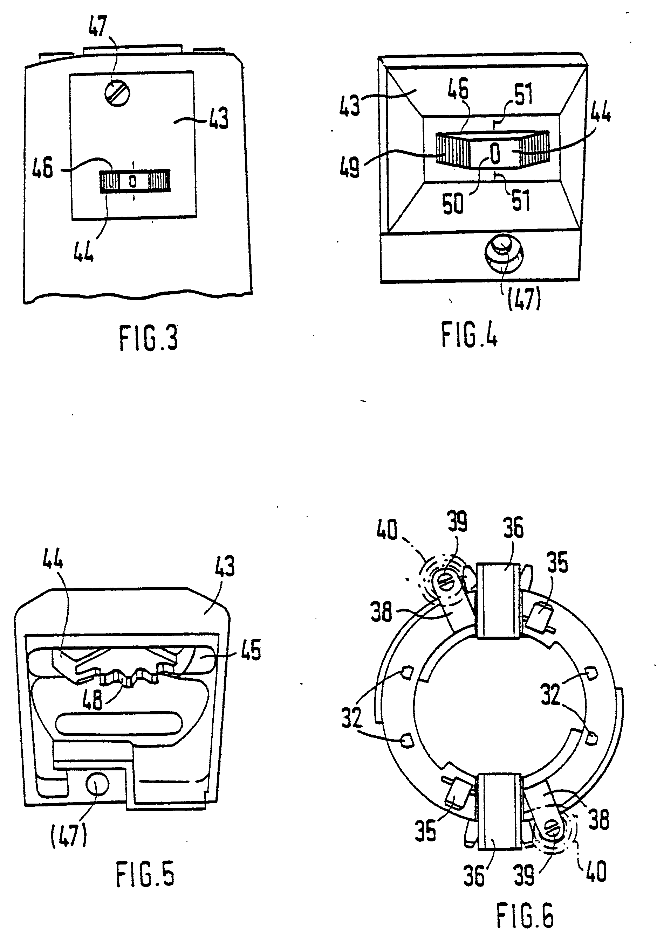

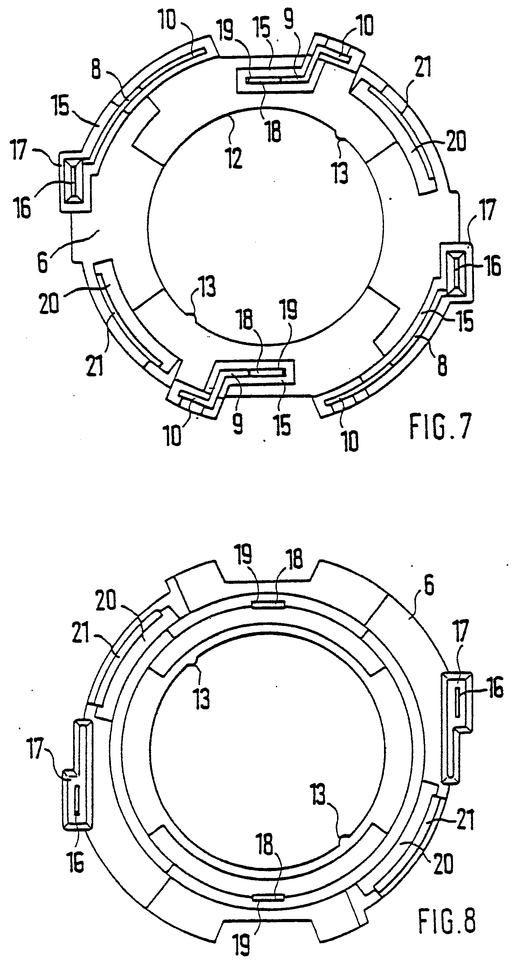

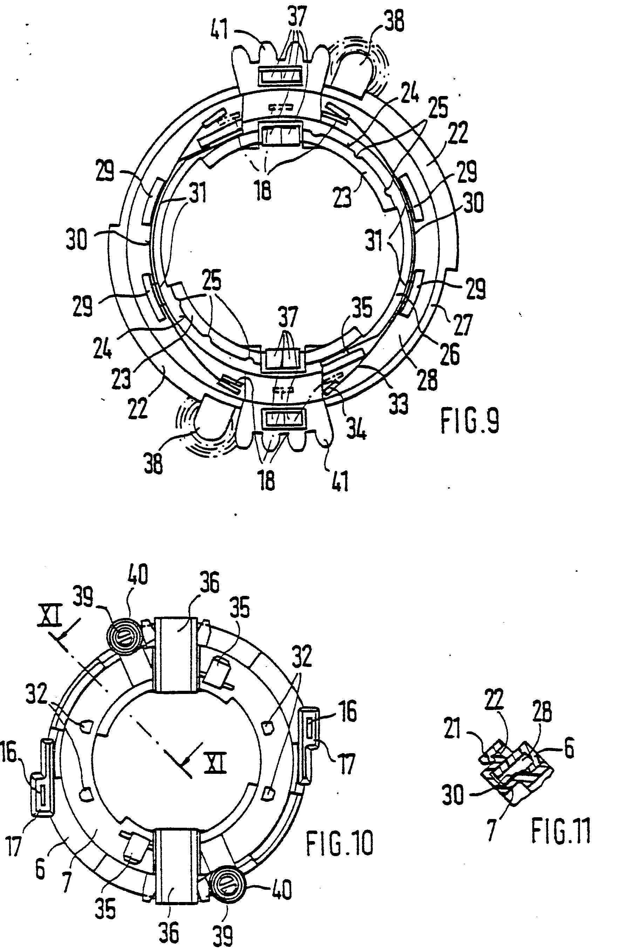

Ein Ausführungsbeispiel des Erfindungsgegenstandes ist in der Zeichnung dargestellt und in der nachfolgenden Beschreibung näher erläutert. Es zeigen Figur 1 eine perspektivische Darstellung eines Stators eines in eine Handwerkzeugmaschine nach der Erfindung einsetzbaren Universalmotors, mit aufgesetztem zweiteiligen Umkehrschalter. Figur 2 eine perspektivische Teilansicht eines Gehäuses einer erfindungsgemäßen Handwerkzeugmaschine mit einer rechteckigen Öffnung, die den Zugang zu den Bürstenhaltern eines eingesetzten Universalmotors ermöglicht, Figur 3 eine Teilansicht eines Gehäuses wie Figur 2 mit durch eine Abdeckplatte verschlossener Zugangsöffnung für die Bürstenhalter, Figur 4 eine perpektivische Darstellung der Abdeckplatte gemäß der gehäuseäußeren Ansicht, Figur 5 eine perspektivische Darstellung wie Figur 4 in der Ansicht vom Gehäuseinneren aus gesehen, Figur 6 eine Draufsicht auf eine einen Teil eines Umkehrschalters bildende Kontaktplatte, Figur 7 eine Draufsicht auf einen den zweiten Teil des Umkehrschalters bildenden Kontakthalter, Figur 8 eine Ansicht des Kontakthalters nach Figur 7 aus entgegengesetzter Sicht, Figur 9 eine Ansicht der Kontaktplatte wie Figur 6 aus entgegengesetzter Sicht, Figur 10 eine Zusammenstellung des Umschalters und Figur 11 einen Schnitt 11-11 zu Figur 10.

In ein Gehäuse 1 einer Handwerkzeugmaschine ist ein Universalelektromotor 2 eingesetzt. Dieser Universalelektromotor 2 hat einen Stator 3 mit einer Wicklung 4. An die anschlußseitige Stirnfläche des Stators 3 ist ein Umkehrschalter 5 angesteckt. Dieser Umkehrschalter 5 besteht aus zwei Trägerkörpern, einem Kontakthalter 6 und einer Kontaktplatte 7. Der Kontakthalter 6 hat vier in eine seiner Stirnseite eingelegte Kontaktbleche 8 und 9, die in Kontaktfahnen 10 enden, die ihrerseits in entsprechende Kontakttaschen 11 an der dem Kontakthalter 6 zugewendeten Stirnfläche des Stators 3 eingreifen können. Im wesentlichen ist der Kontakthalter 6 als Ring ausgebildet, dessen innere Zylinderfläche 2 Rastnocken 13 besitzt. Während die vier Kontaktfahnen 10 in sockelartigen Vorsprüngen 14 des Kontakthalters 6 gehalten sind, erstrecken sich die restlichen Teile der Kontaktbleche 8 bzw. 9, etwa in Umfangsrichtung verlaufend in ringabschnittförmigen Wänden 15 an der gegenüberliegenden Stirnseite des Kontakthalters 6. Die Kontaktbleche 8 enden an ihrem von den Kontaktfahnen 10 abgewendeten Ende in Fahnen 16, die durch Führungszungen 17 vorbei an der Kontaktplatte 7 als Schalteranschlußfahnen zu dem nicht näher dargestellten Gehäuseteil mit dem Schalter hin ragen. Die von den Kontaktfahnen 10 der Kontaktfläche 9 abgewendeten Enden dieser Kontaktbleche 9 besitzen Haltelappen 18 mit Schleifkontakten, die durch Ausnehmungen 19 hindurch in den Bewegungsbereich von federnden Kontaktbändern ragen, die später noch näher beschrieben werden. Durch Durchbrüche 20 im Kontakthalter 6 werden Rastränder 21 gebildet, die zum Zusammenwirken mit Vorsprüngen 22 an der Kontaktplatte 7 bestimmt sind. Diese Befestigungsmittel 21 und 22 sowie Bünde 23 der Kontaktplatte 7, sind die wesentlichen Mittel zum Zusammenfügen der Kontaktplatte 7 mit dem Kontakthalter 6. Dabei werden die zylindrischen Außenflächen 24 der Bünde 23 mit der inneren Zylinderfläche 12 des Kontakthalters 6 zusammengefügt. Rastvertiefungen 25 in den zylindrischen Außenflächen 24 sind zum Zusammenwirken mit den Rastnocken 13 bestimmt. Bünde 26 und 27 der Kontaktplatte 7 bilden die zylindrische Begrenzung für einen Ringraum 28. In diesem Ringraum 28 sind Haltelappen 29 für zwei federnde Kontaktbänder 30 angeordnet. Zwischen den Bund 26 und den Haltelappen 29 sind die Rückwand des Ringraumes 28 durchbrechende Schlitze 31 eingebracht. Die Kontaktbänder 30 besitzen Befestigungslappen 32, die durch diese Schlitze 31 hindurchgesteckt und auf der Rückseite der Kontaktplatte 7 abgebogen werden können. Ein Ende der Kontaktbänder 30 ist aufgeteilt in eine Kontaktzunge 33 mit einem Schleifkontakt 34 und eine Kontaktfahne 35. Diese Kontaktfahne 35 ist durch einen Schlitz in der Kontaktplatte 7 ebenfalls nach außen geführt. Sie dient als Anschlußkontakt für eine nicht dargestellte Kohlebürste die in einem Kohlebürstenhalter 36 gehalten werden kann. Zwei Kohlebürstenhalter 36 sind auf der Kontaktplatte 7 befestigt mittels Lappen 37. Neben den Kohlebürstenhaltern 36 hat die Kontaktplatte 7 Lager 38 mit Lagerzapfen 39 für Spiralfedern 40. Das freie Ende dieser Spiralfedern 40 drückt auf die Rückseite der Kohlebürsten. Unterhalb der Kohlebürstenhalter 36 hat die Kontaktplatte 7 zwei Zahnsegmente 41. Diese Zahnsegmente 41 sind bei im Gehäuse 1 eingesetztem Universalelektromotor 2 durch eine Öffnung 42 in Motorgehäuse 1 zugänglich. Zum Verschließen dieser Öffnungen 42, die zugleich den Kohlebürstenwechsel ermöglichen, dienen Abdeckplatten 43. Mindestens eine dieser Abdeckplatten 43 dient einem Stellrad 44 als Lager. Hierzu ist sie mit einer Mulde 45 versehen, die in einem Schlitz 46 mündet. Eine Schraube 47 dient der Befestigung der Abdeckplatten 43. Das Stellrad 44 besitzt ein Zahnsegment 48, dessen Zähne in eines der Zahnsegmente 41 der Kontaktplatte 7 passen. Der nach außen ragende Teil des Stellrades 44 ist mit einem Griffrändel 49 und einer Nullmarke 50 versehen. Dem Schlitz 46 benachbarte Striche 51 dienen als Einstellmarke für die Nullmarke 50. Ein Anschlußflansch für das Motorgehäuse ist mit 52 bezeichnet. Er besitzt Durchbrüche, durch die die Fahnen 16 zugänglich sind, zum Anschluß eines Hauptschalters.

Der Umkehrschalter 5 wird aus den komplettierten Teilen Kontakthalter 6 und Kontaktplatte 7 zusammengefügt. Dazu werden die Bünde 23 in den Innenzylinder mit der inneren Fläche 12 eingefügt und beide Teile axial so gegeneinander gedrückt, daß die Ränder 21 hinter die Vorsprünge 22 einrasten. Dies ist am besten ersichtlich aus Figur 11. Damit sind der Kontakthalter 6 und die Kontaktplatte 7 in Grenzen gegeneinander verdrehbar verbunden. Die beiden äußeren Rastvertiefungen 25 in den Bünden 23 markieren im Zusammenwirken mit den Rastnocken 13 des Kontakthalters 6 die beiden Stellungen in denen der Umkehrschalter 5 optimal auf die jeweils gewählte Motordrehrichtung eingestellt ist. Die mittleren Rastvertiefungen 25 markieren eine Mittelstellung des Umkehrschalters 5, die bewirkt, daß der Universalmotor 2 nicht in Gang gesetzt werden kann. Der montierte Umkehrschalter 5 wird dadurch mit dem Stator 3 des Universalmotors 2 verbunden, daß er mit den Kontaktfahnen 10 in die entsprechenden Kontakttaschen 11 des Stators 3 eingesteckt wird. Der so komplettierte Universalmotor 2 kann in das Gehäuse 1 eingeschoben werden. Dabei durchgreifen die Fahnen 16 Durchbrüche im Anschlußflansch 52. Diese Fahnen 16 sind somit zugänglich zum Anschluß des Hauptschalters der Handwerkzeugmaschine. Die Zahnsegmente 41 der Kontaktplatte 7 liegen beim so eingesetzten Universalmotor 2 hinter der Öffnung 42 im Gehäuse 1. Durch diese Öffnung 42 sind auch die Kohlebürstenhalter 36 für einen etwa notwendig werdenden Kohlebürstenwechsel zugänglich. Die in die Öffnung 42 einsetzbaren Abdeckplatten 43 bzw. mindestens eine von diesen Abdeckplatten 43 kann nun so in eine der Öffnungen 42 eingesetzt werden, daß das Zahnsegment 48 des in der Abdeckplatte 43 gelagerten Stellrades 44 in Eingriff kommt mit einem der Zahnsegmente 41 der Kontaktplatte 7. Nach dem Festschrauben der Abdeckplatte 43 mit der Schraube 47 kann das Stellrad 44 mittels des Griffrändels 49 verstellt werden. Die Nullmarke 50 bzw. die Striche 51 gestatten das Ablesen der jeweils eingestellten Drehrichtung.

Die gezeigte Steckbauweise ermöglicht ein einfaches Montieren und auch eine einfache Gestaltung der Einzelteile. Dabei wird eine nahezu unbegrenzte Lebensdauer und Kontaktsicherheit dadurch erreicht, daß der Kontakthalter 6 und die Kontaktplatte 7 den staubdichten Ringraum 28 bilden, in dem die Kontakte 18 bzw. 30 angeordnet sind.

**Patentansprüche**

1. Handwerkzeugmaschine für Rechts- und Linkslauf mit einem Universalelektromotor, der eine Einrichtung zum verschieben der auf seinem Kollektor schleifenden Bürsten umfaßt, die als Umschalter mit in Grenzen gegeneinander verdrehbaren Trägerteilen (6, 7) ausgebildet ist, die an ihrer Verbindungsstelle Kontakte tragen, die zum Umschalten der Drehrichtung der Abtriebswelle des Universalmotors beim Drehen der Trägerteile gegeneinander wechselweise in Berührung kommen, dadurch gekennzeichnet, daß nur zwei Trägerteile (6, 7) vorhanden sind, die aus Isoliermaterial aufgebaut und miteinander verbindbar sind, wobei der erste der Trägerteile als Kontakthalter (6) für die Kontakte (16) zum Außenanschluß der Handwerkzeugmaschine und die Kontaktelemente (10) für die vier Polschuhanschlußkontakte und der zweite Trägerteil als Kontaktplatte (7) mit den Kohlebürstehaltern ausgebildet ist, und daß der Kontakthalter (6) und die Kontaktplatte (7) mit ineinander greifenden Bünden (21, 22, 23, 26, 27) versehen sind, die einen Hohlraum (28) bilden, innerhalb dessen die dem Umschalten dienenden Kontaktelemente (18, 30) enden.

2. Handwerkzeugmaschine nach Anspruch 1, dadurch gekennzeichnet daß der Kontakthalter (6) mit vier Kontaktfahnen (10) ausgestattet und mit diesen in vier Kontakttaschen (11) der Polschuhanschlußkontakte in Statorlängsrichtung einsteckbar und so auf den Stator (3) des Universalmotors (2) aufsteckbar ist.

3. Handwerkzeugmaschine nach Anspruch 1, dadurch gekennzeichnet, daß die Kontaktplatte (7) die Bürstenhalter (36) und die Bürstenandruckfedern (40) trägt.

4. Handwerkzeugmaschine nach Anspruch 1, dadurch gekennzeichnet, daß die Bünde mindestens teilweise als Rastelemente (21, 22) ausgebildet sind, die die Kontaktplatte (7) und den Kontakthalter (6) zusammenhalten.

5. Handwerkzeugmaschine nach Anspruch 1, dadurch gekennzeichnet, daß die Bünde den von ihnen gebildeten Hohlraum (28) staubdicht abschließen.

6. Handwerkzeugmaschine nach Anspruch 1, dadurch gekennzeichnet, daß die Kontaktfahnen (16) zum Anschluß der Handwerkzeugmaschine so lang sind, daß sie bei in einem Gehäuse (1) der Handwerkzeugmaschine eingeschobenem Stator (3) mit aufgesetztem Umkehrschalter (5) durch einen durchbrochenen Anschlußflansch (52) des Motorgehäuses (1) hindurchragen bzw. zugänglich sind.

7. Handwerkzeugmaschine nach Anspruch 1, dadurch gekennzeichnet, daß die Kontaktplatte (7) an ihrem Umfang in der Nähe der Bürstenhalter (36) eine Anzahl von Zähnen (41) hat und daß eine Abdeckplatte (43) für eine den Zugang zu einem ein Stellglied (44) trägt, das mit in die Zahne (41) an der Kontaktplatte (7) passenden Zähnen (48) versehen und an ihrem durch einen Schlitz (46) in der Abdeckplatte (43) nach außen tretenden Teil griffig gemacht ist.

8. Handwerkzeugmaschine nach Anspruch 7, dadurch gekennzeichnet, daß das Stellglied ein Stellrad (44) mit nach außen tretendem Griffrändel (49) und mit mindestens einer Bezugsmarke (50) ist.

9. Handwerkzeugmaschine nach Anspruch 7, dadurch gekennzeichnet, daß die Abdeckplatte (43) im Bereich des Schlitzes (46) für das Stellglied (44) eine nach innen offene Tasche bzw. Mulde (45) hat, die dem Stellglied (44) als Lager dient.

10. Handwerkzeugmaschine nach Anspruch 1, dadurch gekennzeichnet, daß die Kontaktplatte (7) eine ringförmige Ausnehmung (28) in ihrer dem Kontakthalter (6) zugewendeten Stirnfläche und vom Boden dieser Ausnehmung (28) nach der anderen Stirnseite führende Schlitze hat, von denen zwei Mal zwei (31) von Befestigungslappen (32) und zwei Mal einer von einer Kontaktfahne (35) je eines federnden Kontaktbandes (30) durchgriffen werden, von denen zwei in die Ausnehmungen (28) einlegbar und durch Abbiegen der Befestigungslappen (32) festlegbar sind.

11. Handwerkzeugmaschine nach Anspruch 1, dadurch gekennzeichnet, daß die Kontaktplatte (7) und der Kontakthalter (6) an ihrer verbindungsstelle verschiedene Drehstellungen dieser Bauelemente (6, 7) zueinander sichernde Rastmittel (13, 25) haben.

12. Handwerkzeugmaschine nach Anspruch 11, dadurch gekennzeichnet, daß die Rastmittel (13, 25) die Stellungen des Umkehrschalters (5) für Rechtslauf und Linkslauf sowie eine neutrale Mittelstellung sichern können, in der der Stromkreis über die Kohlebürsten in den Kohlebürstenhaltern (36) am Umschalter (5) unterbrochen ist.

## Claims

1. Hand machine tool for clockwise and counterclockwise operation having a universal electric motor which comprises a device for sliding the brushes which rub against its collector, which is constructed as a reversing switch with support parts (6, 7) mutually rotatable within limits which carry at their connection point contacts which come into contact alternately during the mutual rotation of the support parts in order to reverse the direction of rotation of the output shaft of the universal motor, characterized in that only two support parts (6, 7) are present which are constructed of insulating material and connectable to each other, the first of the support parts being constructed as a contact holder (6) for the contacts (16) for the external connection of the hand machine tool and the contact elements (10) for the four pole-piece connection contacts, and the second support part as a contact plate (7) having the carbon brush holders, and that the contact holder (6) and the contact plate (7) are provided with interlocking collars (21, 22, 23, 26, 27) which form a cavity (28) within which the contact elements (18, 30) which serve for the reversal terminate.

2. Hand machine tool according to Claim 1, characterized in that the contact holder (6) is equipped with four contact lugs (10) and is insertable by the latter in the longitudinal direction of the stator into four contact pockets (11) of the pole-piece connection contacts and is thus attachable onto the stator (3) of the universal motor (2).

3. Hand machine tool according to Claim 1, characterized in that the contact plate (7) carries the brush holders (36) and the brush pressure springs (40).

4. Hand machine tool according to Claim 1, characterized in that the collars are constructed at least partly as locking elements (21, 22) which hold the contact plate (7) and the contact holder (6) together.

5. Hand machine tool according to Claim 1, characterized in that the collars close the cavity (28) which they form dusttightly.

6. Hand machine tool according to Claim 1, characterized in that the contact lugs (16) for the connection of the hand machine tool are sufficiently long to project and/or to be accessible through a perforated connecting flange (52) of the motor housing (1) when the stator (3) with mounted reversing switch (5) is inserted in a housing (1) of the hand machine tool.

7. Hand machine tool according to Claim 1, characterized in that the contact plate (7) has a plurality of teeth (41) at its circumference near the brush holders (36) and that a cover plate (43) for an aperture (42) in the housing (1) to permit access to a brush holder (36) carries a control element (44) which is provided with teeth (48) which fit into the teeth (41) on the contact plate (7) and is made grippable on its part which passes to the exterior through a slot (46) in the cover plate (43).

8. Hand machine tool according to Claim 7, characterized in that the control element is a control wheel (44) having a milled grippable part (49) which passes to the exterior and has at least one datum mark (50).

9. Hand machine tool according to Claim 7, characterized in that in the region of the slot (46) for the control element (44), the cover plate (43) has a pocket or trough (45) open inwards, which serves as a bearing for the control element (44).

10. Hand machine tool according to Claim 1, characterized in that the contact plate (7) has an annular recess (28) in its end face which faces the contact holder (6), and slots leading from the base of said recess (28) to the other end face, of which twice two (31) are penetrated and engaged by fastening tabs (32) and twice one by a contact lug (35) of a respective resilient contact band (30), two of which are insertable into the recesses (28) and anchorable by bending the fastening tabs (32).

11. Hand machine tool according to Claim 1, characterized in that the contact plate (7) and the contact holder (6) have at their connection point locking means (13, 25) which secure different mutual rotary positions of these components (6, 7).

12. Hand machine tool according to Claim 11, characterized in that the locking means (13, 25) can secure the positions of the reversing switch (5) for clockwise and counterclockwise operation and also a neutral central position in which the circuit through the carbon brushes in the carbon brush holders (36) is interrupted at the reversing switch (5).

## Revendications

1. Machine-outil portative pour la marche à droite et à gauche, avec un moteur électrique universel qui comprend un dispositif pour décaler les balais frottants sur son collecteur, ce dispositif revêtant la forme d'un inverseur avec des pièces porteuses (6, 7) pouvant, dans certaines limites, être décalées réciproquement en rotation, et qui portent à leurs emplacements de jonction, des pièces de contact qui, pour inverser le sens de rotation de l'arbre de sortie du moteur universel, viennent alternativement en contact entre elles lors de la rotation des pièces porteuses, machine caractérisée en ce qu'il est prévu seulement deux pièces porteuses (6, 7) constituées d'un matériau isolant et susceptibles d'être reliées entre elles, la première de ces pièces porteuses constituant un support de contact (6) pour les contacts (16) permettant le raccordement externe de la machine-outil portative, et pour les éléments de contact (10) pour les quatre contacts de raccordement des pièces polaires, tandis que la deuxième pièce porteuse constitue une plaque de contact (7) avec les supports de balais, et le support de contact (6) ainsi que la plaque de contact (7) sont munis de bandeaux (21, 22, 23, 26, 27) qui délimitent un espace creux (28) à l'intérieur duquel se termine les éléments de contact (18, 30) assurant l'inversion.

2. Machine-outil portative selon la revendication 1, caractérisée en ce que le support de contact (6) est équipé de quatre prolongements de contact (10) et est susceptible grâce à eux, d'être enfiché en direction longitudinale du stator dans quatre poches de contact (11) des contacts de raccordement des pièces polaires, et est ainsi susceptible d'être enfiché sur le stator (3) du moteur universel (2).

3. Machine-outil portative selon la revendication 1, caractérisée en ce que la plaque de contact (7) porte les supports de balais (36) et les ressorts d'application des balais (40).

4. Machine-outil portative selon la revendication 1, caractérisée en ce que les bandeaux revêtent partiellement la forme d'éléments d'encliquetage (21, 22) qui maintiennent ensemble la plaque de contact (7) et le support de contact (6).

5. Machine-outil portative selon la revendication 1, caractérisée en ce que les bandeaux ferment de façon étanche à la poussière, l'espace creux (28) délimité par eux.

6. Machine-outil portative selon la revendication 1, caractérisée en ce que les prolongements (16) des contacts pour le raccordement de la machine-outil portative, ont une longueur telle que lorsque le stator (3) est introduit dans un boîtier (1) de la machine-outil portative, avec le commutateur d'inversion (5) placé par dessus, ces prolongements de contact font saillie ou bien sont accessibles à travers une bride de raccordement ajourée (52) du boîtier (1) du moteur.

7. Machine-outil portative selon la revendication 1, caractérisée en ce que la plaque de contact (7) comporte sur sa périphérie au voisinage des supports de balais (36) un certain nombre de dents (41), et qu'une plaque de recouvrement (43) pour une ouverture (42) dans le boîtier (1), permettant l'accès à un support de balais (36), porte un organe de réglage (44) qui est muni de dents (48) s'adaptant dans les dents (41) sur la plaque de contact (7), et cet organe de réglage (44) étant amené en prise sur la pointe de ces dents (41) apparaissant à l'extérieur à travers une fente (46) dans la plaque de recouvrement (43).

8. Machine-outil portative selon la revendication 7, caractérisée en ce que l'organe de réglage est une roue de réglage (44) avec un moletage de manipulation (49) apparaissant à l'extérieur et avec, au moins, un repère de références (50).

9. Machine-outil portative selon la revendication 7, caractérisée en ce que la plaque de recouvrement (43) comporte dans la zone de la fente (46) pour l'organe de réglage (44) une poche ou bien une cavité (45) ouverte vers l'intérieur qui joue le rôle de palier pour l'organe de réglage (44).

10. Machine-outil portative selon la revendication 1, caractérisée en ce que la plaque de contact (7) comporte un évidement annulaire (28) sur sa face frontale tournée vers le support de contact (6), et comporte des fentes allant du fond de cet évidement (28) à l'autre face frontale, fentes parmi lesquelles deux fois deux (31) sont traversées par des pattes de fixation (32) et deux fois une par un prolongement de contact (35) de respectivement une bande élastique de contact (30), dont deux sont susceptibles d'être insérées dans les évidements (28) et d'être fixées par rabattement des pattes de fixation (32).

11. Machine-outil portative selon la revendication 1, caractérisée en ce que la plaque de contact (7) et le support de contact (6) comportent à leur emplacement de jonction, des moyens d'encliquetage (13, 25) bloquant l'une par rapport à l'autre différentes positions de rotation de ces éléments constitutifs (6, 7).

12. Machine-outil portative selon la revendication 11, caractérisée en ce que les moyens d'encliquetage (13, 25) peuvent bloquer les positions du commutateur d'inversion (5) pour la marche à droite et pour la marche à gauche, ainsi qu'une position médiane neutre, dans laquelle le circuit du courant est interrompu sur l'inverseur (5) par l'intermédiaire des balais dans les supports de balais (36).

FIG.1

FIG.2

FIG.3

FIG.4

FIG.5

FIG.6

FIG.7

FIG.8

FIG.9

FIG.10

FIG.11

4